# EUROPÄISCHE PATENTANMELDUNG

(11) **EP 3 312 848 A1**
(43) Veröffentlichungstag der Anmeldung: **25.04.2018**
(21) Anmeldenummer: 17196272.3
(22) Anmeldetag: 13.10.2017
(51) Int. Cl.: H01B 13/18, B60R 16/03, H01B 7/00, H01B 7/08

(54) **VERFAHREN ZUM HERSTELLEN EINER FLACHLEITERANORDNUNG**

(30) Priorität: 18.10.2016 DE 102016119828
(71) Anmelder: ALANOD GmbH & Co. KG, 58256 Ennepetal (DE)
(72) Erfinder: SPECHT, Klaus, 84144 Geisenhausen (DE); REISSENWEBER, Dirk, 96237 Ebersdorf (DE); STEPHAN, Ludwig, 4962 Mining (AT); SCHANDL, Josef, 84163 Marklkofen-Warth (DE)
(74) Vertreter: Patent- und Rechtsanwälte Dr. Solf & Zapf

(57) **Zusammenfassung**

Die Erfindung betrifft ein Verfahren zum Herstellen einer Flachleiteranordnung (10), mit den Schritten: Bereitstellen einer elektrisch leitenden Flachleiterschiene (1); Vorgeben von zumindest einem Kontaktierungsbereich (13) an einer Flachleiteroberfläche (2) der Flachleiterschiene (1); Auftragen eines Haftvermittlers (3) an der Flachleiteroberfläche (2) unter Aussparung des zumindest einen Kontaktierungsbereichs (13), wobei der Haftvermittler (3) eine stoffschlüssige Verbindung zwischen der Flachleiterschiene (1) und einem vorgegebenen Isolationsmaterial begünstigt; Herstellen einer das Isolationsmaterial aufweisenden Isolationsschicht (11) an der Flachleiterschiene (1), nachdem diese mit dem Haftvermittler (3) versehen worden ist; Entfernen eines am Kontaktierungsbereich (13) der Flachleiterschiene (1) hergestellten Abschnitts (12) der Isolationsschicht (11).

## Beschreibung

Die Erfindung betrifft ein Verfahren zum Herstellen einer Flachleiteranordnung.

Durch die vermehrte Anwendung unterschiedlicher Materialkombinationen in Fahrzeugkarosserien bis hin zur kompletten CFK-Karosserie (zum Beispiel bei Monocoques) wird zukünftig die elektrische Masserückführung bei Kraftfahrzeugen stark beeinträchtigt bzw. sogar unfunktionell. Hierdurch wäre zum Teil die Masserückführung durch den Einsatz vermehrter sogenannter Litzenleiter notwendig und eine Gewichtserhöhung des Bordnetzes bzw. des Kabelbaumes zu erwarten.

Der über sogenannte Massebolzen eingeleitete elektrische Masserückstrom folgt üblicherweise immer dem Weg des geringsten elektrischen Widerstandes. Durch die Verwendung unterschiedlicher Karosseriematerialien und Verbindungstechniken, wie zum Beispiel Kleben, Nieten, Schweißen und dergleichen, entsteht ein undefinierter bzw. ungerichteter elektrischer Masserückstrom von Verbrauchern zu einer Fahrzeugbatterie. Dieser ungerichtete Masserückstrom baut ein elektromagnetisches Feld auf, welches sich negativ auf Fahrzeuginsassen und die Bordelektronik auswirken kann.

Durch die Anwendung sogenannter Flachleiterschienen, insbesondere aus Aluminium, können der Einbauraum und das Leitergewicht für die elektrische Masserückführung stark reduziert werden. Derartige Flachleiterschienen werden häufig entlang einer Bodengruppenkontur von einem Heckbereich bis zu einem Frontbereich eines Fahrzeugs verlegt. Insbesondere eine mehrlagige Flachleiterstruktur als zentrale elektrische Versorgung und Masserückführung eliminiert das Ausbilden eines elektromagnetischen Feldes unabhängig von den eingesetzten Karosseriewerkstoffen. Durch derartige Flachleiteranordnungen in Fahrzeugen wird zudem eine verbesserte Bordnetzstabilität erreicht.

Um eine effektive gegenseitige Auslöschung von elektromagnetischen Feldern von zwei benachbarten Flachleiterschienen zu ermöglichen, ist eine möglichst nahe und flächige Positionierung der beiden Flachleiterschienen zueinander erforderlich. Im Gegensatz zu Flachleiter-Versorgungsleitungen, die hauptsächlich im Unterbodenbereich und teilweise auch im Interieurbereich ohne eine zweite, masserückführende Schiene, meist mit relativ starken PVC Isolationsstärken von über 2,5 mm eingesetzt werden, benötigen derartige mehrschichtige Flachleiterschienen relativ geringe Isolationswandstärken.

Um eine besonders einfache und kostengünstige Abisolierbarkeit bei Aluminiumflachleiterkernen, also bei Flachleiterschienen aus Aluminium, zu ermöglichen, werden häufig nicht anhaftende Isolationsmaterialien zum Isolieren solcher Aluminiumflachleiterkerne verwendet. Diese Isolationsmaterialien weisen durch ihre Verarbeitung, geometrische Anordnung und Temperaturwechsel jedoch häufig relativ hohe innere mechanische Spannungen auf, die einen Materialschrumpf von über 20 mm über eine Länge von 3.000 mm aufweisen können. Auch in Querrichtung können mechanische Spannungen entstehen, so dass bei Temperaturwechseltests oder Temperaturschocktests die verwendeten Isolationsmaterialien reißen. Aufgrund von Relativbewegungen zwischen Flachleiterschienen und den zur Isolierung eingesetzten Isolationskunststoffen, v. a. durch Temperaturwechsel-Längenveränderungen, kann es zu Schnitteffekten und damit zu Isolationsmaterialbrüchen kommen.

Eine stoffschlüssige Verbindung des Isolationskunststoffes mit der Flachleiterschiene würde einen Materialschrumpf eliminieren und eine optimale Temperaturwechselbeständigkeit des Gesamtbauteils, also der mit dem Isolationskunststoff beschichteten Flachleiterschiene, bewirken. Jedoch würde dies ein wesentlich aufwändigeres und teureres Abisolierungsverfahren nach sich ziehen, um eine optimal anhaftende Isolation von dem Flachleiterkern, also der Flachleiterschiene, wieder zu lösen. Beispielsweise könnte ein Abfräsen der Isolationsschicht vom Flachleiterkern eine Spanbildung hervorrufen. Um einen Kurzschluss durch einen verbleibenden Metallspan zu vermeiden, wäre ein aufwändiges Reinigungsverfahren erforderlich. Bei einem flächigen Ablasern einer Isolation kann beispielsweise eine thermische Veränderung der Metalloberfläche auftreten, wobei zudem undefinierte Degradationsreste der Isolation unerwünschte Wechselwirkungen verursachen können.

Es ist daher die Aufgabe der vorliegenden Erfindung, ein Verfahren zum Herstellen einer Flachleiteranordnung, welche zumindest eine elektrisch leitende Flachleiterschiene und eine diese zumindest teilweise ummantelnde Isolationsschicht aufweist, bereitzustellen, mittels welchem gleichzeitig eine besonders stabile Verbindung zwischen der Isolationsschicht und der Flachleiterschiene sowie eine besonders einfache lokale Abisolierbarkeit der Isolationsschicht ermöglicht wird.

Diese Aufgabe wird durch ein Verfahren zum Herstellen einer Flachleiteranordnung mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Herstellen einer Flachleiteranordnung wird eine elektrisch leitende Flachleiterschiene bereitgestellt. Die bereitgestellte Flachleiterschiene dient als eine Art Flachleiterkern bei der herzustellenden Flachleiteranordnung. Bei der Flachleiterschiene handelt es sich um eine bandförmige Schiene aus einem stromleitenden Material. Die Abmaße der Flachleiterschiene in Breitenrichtung und Längenrichtung sind dabei groß im Verhältnis zur Dicke, also der Höhe, der Flachleiterschiene. Die besagten Flachseiten erstrecken sich in Längs- und Querrichtung der Flachleiterschiene und weisen eine wesentlich größere Oberfläche als jeweilige Seitenflächen der Flachleiterschiene auf, die sich in Längs- und Hochrichtung der Flachleiter erstrecken. Die Flachseiten weisen zudem auch eine wesentlich größere Oberfläche als jeweilige Stirnflächen der Flachleiterschiene auf, die sich in Quer- und Hochrichtung der Flachleiterschiene erstrecken.

Zudem wird zumindest ein Kontaktierungsbereich an einer Flachleiteroberfläche der Flachleiterschiene vorgegeben. Der zumindest eine Kontaktierungsbereich dient zur Anbindung eines Kontaktelements, wie beispielsweise einer Schraublasche, einer Steckzunge, eines Schraubbolzens, einem Kabelschuh oder dergleichen. Alternativ kann an dem Kontaktierungsbereich auch direkt ein elektrischer Leiter mit der Flachleiterschiene elektrisch leitend verbunden werden.

Ein Haftvermittler wird anschließend an der Flachleiteroberfläche unter Aussparung des zumindest einen Kontaktierungsbereichs aufgetragen, wobei der Haftvermittler eine stoffschlüssige Verbindung zwischen der Flachleiterschiene und einem vorgegebenen Isolationsmaterial begünstigt. Anschließend wird eine das Isolationsmaterial aufweisende Isolationsschicht an der Flachleiterschiene hergestellt, nachdem diese mit dem Haftvermittler versehen worden ist. Die Isolationsschicht wird dabei vorzugsweise derart an der Flachleiterschiene hergestellt, dass eine Verbindung, besonders bevorzugt eine stoffschlüssige Verbindung, zwischen der Isolationsschicht und der Flachleiteroberfläche ausgebildet wird. Schließlich wird ein am Kontaktierungsbereich der Flachleiterschiene hergestellter Abschnitt der Isolationsschicht entfernt.

Ein wesentlicher Aspekt der erfindungsgemäßen Lösung besteht darin, dass die Flachleiterschiene mit einem Haftvermittler, also einem sogenannten Primer, beaufschlagt wird. Infolgedessen wird eine stoffschlüssige Verbindung zwischen dem Isolationsmaterial und der Flachleiterschiene begünstigt. Die Bereiche, in denen die Isolationsschicht nach dem Herstellen wieder entfernt werden soll, werden jedoch ausgespart, sodass nachfolgend eine konventionelle und vereinfachte Abisolation durchgeführt werden kann. Durch diesen selektiven Auftrag des Haftvermittlers wird eine möglichst optimale Verbindung des Isolationsmaterials mit der Flachleiterschiene begünstigt. Infolgedessen wird eine langzeitbeständige und temperaturwechselbeständige Isolationsschicht an der Flachleiteroberfläche hergestellt. An den Stellen, an welchen der Haftvermittler ausgespart worden ist, ergibt sich hingegen eine vereinfachte Bearbeitung der Flachleiterschiene, insbesondere um jeweilige Abschnitte der Isolationsschicht wiederum zu entfernen, um an dem vorgegebenen Kontaktierungsbereich oder mehreren vorgegebenen Kontaktierungsbereichen beispielsweise auf besonders zuverlässige Weise ein elektrisches Kontaktelement anbinden zu können.

Der Erfindung liegt dabei die Erkenntnis zugrunde, dass Isolationsmaterialien, welche meistens aus Kunststoffen bestehen, sich nur sehr schlecht oder gar nicht mit metallischen Oberflächen verbinden. Eine optimale stoffschlüssige Verbindung von Kunststoffen auf zum Beispiel Aluminiummaterialien erfordert die Verwendung eines Haftvermittlers, der einerseits zuerst eine stoffschlüssige Verbindung mit der Metalloberfläche durchführt und nachfolgend, zum Beispiel in einem Extrusionsprozess zur Herstellung der Isolationsschicht, eine physikalische oder chemische Verbindung mit dem Isolationsmaterial eingeht.

Beispielsweise kann ein regelmäßiger und wiederkehrender Auftrag des Haftvermittlers an der Flachleiteroberfläche durchgeführt werden. Infolgedessen kann ein einheitliches bzw. standardisiertes Halbzeug hergestellt werden, bei welchem eine Abisolation der später aufgebrachten Isolationsschicht je nach Erfordernis individuell durchgeführt werden kann.

Bei besonders dünnen Flachleiterschienen kann es ausreichend sein, den Haftvermittler nur an den jeweiligen Flachseiten, welche flächenmäßig den größten Anteil der Flachleiterschiene ausmachen, aufzutragen. Sollte hingegen die Flachleiterschiene etwas dicker ausgebildet sein, so kann es auch vorteilhaft sein, an den schmalen Längsseiten zusätzlich auch noch den Haftvermittler aufzutragen.

Als Isolationsmaterial können grundsätzlich alle Thermoplaste oder thermoplastischen Elastomere mit ausreichender elektrischer Isolationseigenschaft und Flexibilität verwendet werden. Insbesondere sind Polyolefine (PP Copolymere, PE, etc.), Polyamide (PA 12, etc.), PVC, TPE oder vernetzende PE einsetzbar. Als Isolationsschichtstärken bzw. Wandstärken der Isolationsschicht sind je nach Kunststofftyp und Verarbeitungstechnik 0,15 bis 3,5 mm, bevorzugt 0,3 bis 1,5 mm ausreichend. Sofern an den schmalen Längsseiten ebenfalls der Haftvermittler aufgetragen werden soll, sind dort Schichtdicken bei der Isolationsschicht von 0,5 bis 2,0 mm zu bevorzugen.

Eigene Messungen an 60 x 1 mm Aluminiumwalzbändern mit einer 0,3 mm starken PP-Isolation mit Überständen an den schmalen Längsseiten der Flachleiterschiene ergaben eine elektrische Durchschlagsfestigkeit von 16 KV. Somit können die erfindungsgemäß hergestellten Flachleiteranordnungen außer im 12 Volt- und 48 Voltbereich auch im Hochvoltbereich eingesetzt werden.

Aus Leichtbaugründen wird die Flachleiterschiene vorzugsweise aus Aluminium hergestellt. Als Aluminiummaterial können alle üblichen Strangpressmaterialien oder Walzbänder mit einer Reinheit von mindestens 99,5% oder höher eingesetzt werden. Hierdurch wird eine ausreichende elektrische Leitfähigkeit bei einstellbarer Materialhärte gewährleistet. Bei aus Aluminium hergestellten Flachleiterschienen sind Materialstärken bzw. Materialdicken von 0,5 bis 5,0 mm, insbesondere von 1,0 bis 3 mm, vorteilhaft. Die Breiten der Flachleiterschienen bewegen sich Vorzugsweise im Bereich von 5 bis 60 mm, besonders bevorzugt im Bereich von 15 bis 60 mm.

Die Isolationsschicht kann zudem die Aufgabe haben, eine durch einen Walzband-Schnittprozess verursachte Wölbung oder Gratbildung der Flachleiterschiene quer zur Hauptausrichtungsachse auszugleichen und eine ausreichende Durchschlagsfestigkeit zu gewährleisten. Ferner kann auch eine außermittige Lage der als Flachleiterkern dienenden Flachleiterschiene während der Herstellung der Isolationsschicht mit einer entsprechend gewählten Isolationsschichtstärke oder - geometrie abgefangen werden.

Wie erwähnt, ist aufgrund des Leichtbaugedankens Aluminium als stromleitendes Kernmaterial für die Flachleiterschiene zu bevorzugen. Jedoch können noch weitere gängige elektrisch leitende Materialien bzw. Legierungen, wie zum Beispiel Kupfer oder Messing anstelle von Aluminium verwendet werden. Die Flachleiterschiene kann dabei unterschiedlichste Querschnittsgeometrien bzw. Profilformen aufweisen und dabei verschiedenste Breiten- als auch Höhenverhältnisse aufweisen. Insbesondere wenn Aluminium als Material für die Flachleiterschiene eingesetzt wird, kann es sich dabei um Walzbleche, Walzbänder, Strangpressprofile, Knet- oder Gießmaterialien oder auch um Folien handeln.

Mittels des erfindungsgemäßen Verfahrens wird also eine Flachleiteranordnung bereitgestellt, welche besonders stabile Langzeiteigenschaften aufgrund der stoffschlüssigen Verbindung des Isolationsmaterials mit der Flachleiterschiene aufweist. Dadurch kann insbesondere ein unerwünschtes Schrumpfen der Isolationsschicht verhindert werden. Darüber hinaus ergibt sich insbesondere eine besonders gute Temperaturwechselfestigkeit und Verformbarkeit der gesamten Flachleiteranordnung. Darüber hinaus kann durch den nur selektiven Auftrag des Haftvermittlers sichergestellt werden, dass lokal, also in den jeweiligen Kontaktierungsbereichen, eine besonders einfache und kostengünstige Abisolation der aufgetragenen Isolationsschicht garantiert werden kann. Durch die sauber abisolierbaren Kontaktierungsbereiche können beispielsweise elektrische Kontaktelemente besonders prozesssicher an der Flachleiterschiene stoffschlüssig und mediendicht angebracht, beispielsweise verschweißt werden.

Die erfindungsgemäß hergestellten Flachleiteranordnungen können zur gezielten elektrischen Masserückführung in Fahrzeugen mit schlecht oder nicht elektrisch leitenden Karosserien, beispielsweise aus CFK, eingesetzt werden. Beim Einsatz derartiger Flachleiteranordnungen kann eine Verbesserung der elektromagnetischen Verträglichkeit im Fahrzeug ohne eine zusätzliche Schirmung realisiert werden. Auch ist eine konventionelle Kabelbaummontage mit flexiblen Versorgungsleitungen möglich, insbesondere ohne externe B+-Leitungen mit Karosseriedurchbrüchen und Abdichtungssystemen. Die als elektrisches Versorgungs- und/oder Masseband dienende Flachleiteranordnung kann an jeder Stelle kontaktiert werden, ist also "multidrop"-fähig. Insbesondere wenn Aluminium als Material für die Flachleiterschiene verwendet wird, kann ein besonders hoher Leichtbaugrad bei der hergestellten Flachleiteranordnung erzielt werden.

Derartige Flachleiteranordnungen weisen zudem eine reduzierte Einbauhöhe im Vergleich zu den konventionellen, runden Versorgungs- oder Masselitzenleitern auf. Ferner weisen derartig hergestellte Flachleiteranordnungen eine höhere Stromtragfähigkeit als Litzenleiter mit gleicher Querschnittsfläche auf. Unter Verwendung derartiger Flachleiteranordnungen bei einer Mehrschichtflachleiterstruktur ist zudem eine erhöhte Bordnetzstabilität und Eliminierung von elektromagnetischen Feldern erzielbar. Darüber hinaus können eine Starter-Generator-Batterieschiene und eine Fahrzeuginnenraum-Versorgungsschiene (auch Klemme 30) voneinander entkoppeltwerden. Die derart hergestellten Flachleiteranordnungen sind sowohl in 12 V-, 48 V- und Hochvolt-Bordnetzen einsetzbar. Die Verwendung der mittels des erfindungsgemäßen Verfahrens hergestellten Flachleiteranordnungen ist nicht nur auf den Automobilbereich beschränkt.

Eine vorteilhafte Ausführungsform der Erfindung sieht vor, dass vor dem Auftragen des Haftvermittlers die Flachleiteroberfläche derart behandelt wird, dass eine stoffschlüssige Verbindung zwischen dem Haftvermittler und der Flachleiterschiene begünstigt wird. Vorzugsweise wird dafür die Flachleiteroberfläche elektrochemisch, chemisch oder physikalisch behandelt. Für eine optimale stoffschlüssige Verbindung zwischen dem Haftvermittler und dem Flachleiterschienenmaterial wird also vorzugsweise die Flachleiteroberfläche beispielsweise elektrochemisch behandelt. Eine elektrochemische Behandlung kann zum Beispiel durch eine anodische Oxidation, beispielsweise mittels eines Eloxalverfahrens, erfolgen. Insbesondere bei einem Temperatureintrag bei der Herstellung der Haftvermittlerschicht kann dadurch eine chemische Reaktion des Haftvermittlermaterials an der Flachleiteroberfläche der Flachleiterschiene begünstigt werden. Auch anderweitige, chemische oder physikalische Oberflächenbehandlungen bzw. eine günstige Materialkombination im Hinblick auf den eingesetzten Haftvermittler und den Flachleiterschienenwerkstoff können eine stoffschlüssige Verbindung zwischen dem Isolationsmaterial und dem Haftvermittler und zwischen dem Haftvermittler und der Flachleiterschiene begünstigen.

In weiterer vorteilhafter Ausgestaltung der Erfindung ist es vorgesehen, dass der Haftvermittler nach dem Auftragen auf die Flachleiteroberfläche thermisch behandelt wird. D. h., durch die Einbringung der Aktivierungsenergie durch Wärmeeintrag kann optimaler Weise eine chemische Reaktion mit der Flachleiteroberfläche erreicht werden. Beispielsweise kann der Haftvermittler durch einen entsprechenden Temperatureintrag in die Flachleiteroberfläche "eingebrannt" werden. Die thermische Behandlung des aufgetragenen Haftvermittlers kann dabei entweder vor dem Herstellen der Isolationsschicht oder während des Herstellens der Isolationsschicht erfolgen. Je nachdem, wie die Isolationsschicht an der Flachleiterschiene hergestellt wird, kann prozessbedingt dadurch ohnehin ein Temperatureintrag erfolgen, welcher das thermische Behandeln, vorzugsweise das Einbrennen, des Haftvermittlers bedingt. Durch das thermische Behandeln des Haftvermittlers kann sichergestellt werden, dass der Haftvermittler zum einen an der Flachleiteroberfläche anhaftet und zum anderen auch seine haftvermittelnde Wirkung voll entfaltet. Durch die thermische Behandlung des Haftvermittlers wird also eine feste chemische und / oder physikalische Verankerung der Isolationsschicht an der Flachleiteroberfläche begünstigt.

Eine weitere vorteilhafte Ausführungsform sieht vor, dass der Haftvermittler zumindest in Teilbereichen einen duroplastischen oder thermoplastischen Polymerwerkstoff aufweist. Als Haftvermittler, also als Primer, können also Polymerwerkstoffe mit duroplastischen oder thermoplastischen Anteilen eingesetzt werden. Diese weisen besonders gute haftvermittelnde Eigenschaften auf.

In weiterer vorteilhafter Ausgestaltung der Erfindung ist es vorgesehen, dass der Haftvermittler eine erste Seite mit einer polaren, chemisch reaktiven Gruppe und eine zweite Seite mit Materialbestandteilen umfasst, welche sich ebenfalls in dem Isolationsmaterial befinden, wobei die erste Seite der Flachleiteroberfläche und die zweite Seite der Isolationsschicht zugewandt wird. Bei der polaren, chemisch reaktiven Gruppe kann es sich beispielsweise um Maleinsäureanhydrid oder Polyurethangruppen handeln. Die zweite Seite kann beispielsweise Polymerbestandteile umfassen, welche ebenfalls im Isolationswerkstoff enthalten sind, dadurch wird eine chemische oder physikalische Bindung zwischen dem Haftvermittler und der Isolationsschicht begünstigt.

Gemäß einer weiteren vorteilhaften Ausführungsform der Erfindung ist es vorgesehen, dass der Haftvermittler mittels zumindest einem der folgenden Verfahren aufgetragen wird: Sprühauftrag, wobei ein den Teilbereich umgebender Bereich der Flachleiteroberfläche dabei maskiert oder nur lokal begrenzt benetzt wird, Tampondruck, Rollenauftrag, Siebdruck oder Inkjetdruck. Der Sprühauftrag auf die Flachleiteroberfläche kann zudem auch ohne eine Maskierung erfolgen. Der Haftvermittler kann prinzipiell sequenziell, regelmäßig, unregelmäßig, durchgehend oder gezielt selektiv aufgetragen werden. Beispielsweise kann der Haftvermittler mittels Rollen- oder Sprühauftrag streifenförmig, sich in Längsrichtung der Flachleiterschiene erstreckend aufgetragen werden, wobei zumindest ein weiterer streifenförmiger Bereich auf der Flachleiteroberfläche nicht mit dem Haftvermittler versehen wird. Durch diesen durchgängigen teilbereichsweisen Auftrag des Haftvermittlers kann ein standardisiertes Halbzeug erzeugt werden. Ein sehr flexibler, selektiver Auftrag des Haftvermittlers ist hingegen beispielsweise durch die Verwendung des Inkjetverfahrens realisierbar. Hierbei können durch Zu- und Abschalten von Druckköpfen nicht anhaftende Bereiche erzeugt werden, bei welchen der Haftvermittler auf ganz einfache Weise an der Flachleiteroberfläche ausgespart werden kann. Je nachdem, in welchen Bereichen der Haftvermittler auf der Flachleiterschiene aufgetragen werden soll, kann eines der oben genannten Verfahren ausgewählt werden, alternativ können auch mehrere der oben genannten Verfahren miteinander kombiniert werden.

Eine weitere vorteilhafte Ausführungsform der Erfindung sieht vor, dass vor dem Auftragen des Haftvermittlers der zumindest eine Kontaktierungsbereich an der Flachleiteroberfläche abgedeckt wird. Beispielsweise können Klebebänder oder Haftbänder auf die Flachleiteroberfläche aufgeklebt werden, wodurch sichergestellt werden kann, dass in diesen Bereichen kein Haftvermittler auf der Flachleiteroberfläche aufgetragen wird. Beispielsweise können auch flexibel verfahrbare Maskierungen oder Klemmen verwendet werden, um die vorgegebenen Kontaktierungsbereiche der Flachleiteroberfläche abzudecken, so dass sichergestellt werden kann, dass in diesen Bereichen kein Haftvermittler aufgetragen wird. Grundsätzlich können beliebige Mittel eingesetzt werden, um die vorgegebenen Kontaktierungsbereiche vor dem Auftragen des Haftvermittlers auf der Flachleiteroberfläche zu maskieren bzw. abzudecken. Dadurch kann sichergestellt werden, dass die Bereiche, die ausgespart werden sollen, auch tatsächlich nicht mit dem Haftvermittler beaufschlagt werden.

In weiterer vorteilhafter Ausgestaltung der Erfindung ist vorgesehen, dass das Isolationsmaterial zumindest teiltransparent ist und der Haftvermittler eine andere Farbe als das Isolationsmaterial und als die Flachleiterschiene aufweist. Nach der Herstellung der Isolationsschicht kann dadurch auf besonders einfache Weise erkannt werden, wo der Haftvermittler aufgetragen worden ist und wo dieser an der Flachleiteroberfläche ausgespart worden ist. Dies erleichtert das gezielte Entfernen der Isolationsschicht an den Stellen, welche beim Gebrauch der Flachleiteranordnung später als Kontaktierungsbereich dienen sollen.

Alternativ oder zusätzlich ist es auch möglich, dass der zumindest eine unterhalb der Isolationsschicht angeordnete Kontaktierungsbereich auf der Isolationsschicht markiert wird. Zur Markierung des unterhalb der Isolationsschicht angeordneten Kontaktierungsbereichs, also desjenigen Bereichs, bei welchem die Auftragung des Haftvermittlers ausgespart worden ist, können beispielsweise Laser oder Drucker verwendet werden. Diese Markierung wird vorzugsweise mit dem jeweiligen Auftragsprozess des Haftvermittlers synchronisiert, um bei einer gezielten Entfernung der Isolationsschicht auch die Bereiche der Flachleiteroberfläche sicher treffen zu können, bei welchen der Haftvermittler ausgespart worden ist.

Gemäß einer weiteren vorteilhaften Ausführungsform der Erfindung ist es vorgesehen, dass die Isolationsschicht hergestellt wird, indem die mit dem Haftvermittler versehene Flachleiterschiene durch ein Extrusionswerkzeug hindurch befördert wird, mittels welchem die Isolationsschicht außenseitig auf die Flachleiterschiene extrudiert wird. Im Extrusionsprozess erfolgt durch Temperatur- und Druckeintrag eine physikalische Verbindung oder sogar eine chemische Reaktion zwischen dem Isolationswerkstoff und der Flachleiterschiene und zwar dort, wo der Haftvermittler aufgebracht worden ist. Der Haftvermittler wird dabei vor dem Extrusionsprozess derart anhaftend an der Flachleiterschiene angebracht, dass dieser die bei der Extrusion auftretenden Scherkräfte übersteht, also ohne dass der aufgetragene Haftvermittler während der Extrusion verwischt oder anderweitig von ihrer ursprünglichen Position an der Flachleiteroberfläche entfernt wird. Durch das Extrudieren kann die Isolationsschicht besonders einfach und schnell an der Flachleiterschiene angebracht werden, insbesondere wenn die gesamte Flachleiterschiene von der Isolationsschicht ummantelt werden soll.

Gemäß einer alternativen vorteilhaften Ausführungsform der Erfindung ist es vorgesehen, dass die Isolationsschicht hergestellt wird, indem die mit dem Haftvermittler versehene Flachleiterschiene in ein Spritzgießwerkzeug eingelegt und anschließend die Isolationsschicht außenseitig auf die Flachleiterschiene angespritzt wird. Durch Spritzguss ist es ebenfalls möglich, die Flachleiterschiene, sofern denn erforderlich, vollständig mit der Isolationsschicht zu ummanteln. Spritzguss ist dabei ebenfalls wie die Extrusion besonders gut bei hohen Stückzahlen dazu geeignet, kostengünstig und prozesssicher die Isolationsschicht an der Flachleiterschiene herzustellen. Weitere Alternativen zum Auftragen der Isolationsschicht sind der Sprühauftrag oder die Beschichtung über ein Tauchbad.

Eine weitere vorteilhafte Ausführungsform der Erfindung sieht vor, dass das Auftragen des Haftvermittlers in einen Herstellprozess der Flachleiterschiene oder in einen Herstellprozess der Isolationsschicht integriert wird. Diese Integration des Auftragens des Haftvermittlers, entweder in den Herstellprozess der Flachleiterschiene selbst oder in den Herstellprozess der Isolationsschicht, bringt eine relativ geringe bis vernachlässigbare Kostenerhöhung mit sich, bewirkt im Nachgang aber eine wesentliche Erleichterung bei der lokalen Abisolation der Isolationsschicht.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten Merkmale und Merkmalskombinationen sind dabei nicht nur in Alleinstellung sondern auch in Kombination untereinander verwendbar, ohne den Rahmen der Erfindung zu verlassen.

Die Zeichnung zeigt in:
- Fig. 1: eine erste Variante zum Aufbringen eines Haftvermittlers an einer ersten Ausführungsform einer Flachleiterschiene, wobei der Haftvermittler unter Aussparung von gewissen Bereichen auf jeweiligen oberen und unteren Flachseiten der Flachleiterschiene aufgetragen wird;
- Fig. 2: eine zweite Variante zum Aufbringen des Haftvermittlers an einer zweiten Ausführungsform der Flachleiterschiene, welche dicker als die erste Ausführungsform der Flachleiterschiene ist, wobei nicht nur an den oberen und unteren Flachseiten sondern zusätzlich noch jeweilige schmale Längsseiten der Flachleiterschiene mit dem Haftvermittler beaufschlagt werden;
- Fig. 3: eine dritte Variante zum Aufbringen des Haftvermittlers an der ersten Ausführungsform der Flachleiterschiene, wobei der Haftvermittler mittels Sprühauftrag aufgetragen und bestimmte Bereiche der Flachleiterschiene mittels einer Klemme maskiert werden;
- Fig. 4: eine vergrößerte Perspektivansicht der in Fig. 3 eingesetzten Klemme;
- Fig. 5: eine vierte Variante zum Aufbringen des Haftvermittlers an der zweiten Ausführungsform der Flachleiterschiene, wobei der Haftvermittler wiederum mittels Sprühauftrag aufgetragen und mittels einer Klemme bestimmte Bereiche der Flachleiterschiene maskiert werden;
- Fig. 6: eine vergrößerte Perspektivansicht in Fig. 5 eingesetzten Klemme;
- Fig. 7: eine fünfte Variante zum Aufbringen des Haftvermittlers an der ersten Ausführungsform der Flachleiterschiene, wobei an jeweiligen oberen und unteren Flachseiten der Flachleiterschiene mittels jeweiligen Rollen der Haftvermittler bandförmig aufgetragen wird;
- Fig. 8: eine sechste Variante einer Ausführungsform des Verfahrens zum Aufbringen des Haftvermittlers an der zweiten Ausführungsform der Flachleiterschiene, wobei mittels mehrerer Rollen sowohl an den oberen und unteren Flachseiten als auch an einer schmalen Längsseite der Haftvermittler aufgetragen wird; und in
- Fig. 9: eine Perspektivenansicht einer Flachleiteranordnung, welche wie in Fig. 8 mit dem Haftvermittler beaufschlagt worden ist, wobei danach eine Isolationsschicht an der Flachleiterschiene aufgebracht und anschließend an den Bereichen, wo der Haftvermittler ausgespart worden ist, die Isolationsschicht wieder abisoliert wird.

In den Figuren werden gleiche oder funktionsgleiche Elemente mit den gleichen Bezugszeichen versehen.

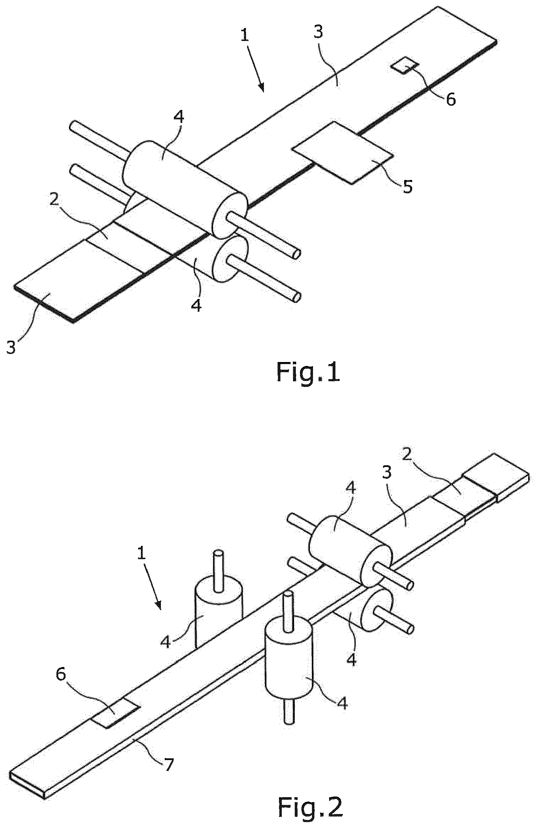

Eine erste Ausführungsform einer Flachleiterschiene 1 ist in einer schematischen Perspektivansicht in Fig. 1 gezeigt. Diese erste Ausführungsform zeichnet sich dadurch aus, dass die Flachleiterschiene 1 besonders flach ist. Die Flachleiterschiene 1 kann beispielsweise aus Aluminium hergestellt sein. Die Flachleiterschiene 1 dient als sogenannter Flachleiterkern zur elektrischen Versorgung oder Masserückführung in Kraftfahrzeugen. Es ist üblich, dass derartige Flachleiterschienen 1 noch mit einer hier nicht dargestellten Isolationsschicht aus einem Kunststoff ummantelt werden. An unterschiedlichen Stellen einer Flachleiteroberfläche 2 der Flachleiterschiene 1 werden dabei üblicherweise hier nicht näher gekennzeichnete Kontaktierungsbereiche vorgegeben. Diese Kontaktierungsbereiche dienen beim Einsatz der Flachleiterschiene 1 als Stellen, an welchen beispielsweise Kabel oder andere elektrische Leiter oder Kontaktierungselemente an der Flachleiterschiene 1 angebracht bzw. kontaktiert werden. Daher ist es wichtig, dass an diesen Kontaktierungsbereichen möglichst nur das blanke metallische, elektrisch leitende Material der Flachleiterschiene 1 vorliegt. Nach dem Aufbringen der Isolationsschicht muss diese daher möglichst rückstandsfrei von diesen Kontaktierungsbereichen entfernt werden.

Gleichzeitig ist aber auch wichtig, dass diese besagte Isolationsschicht abgesehen von den Kontaktierungsbereichen fest, vorzugsweise stoffschlüssig, an der Flachleiterschiene 1 anhaftet. Um zum einen eine besonders leichte Abisolierung der hier nicht dargestellten Isolationsschicht zu ermöglichen und zum anderen sicherstellen zu können, dass die Isolationsschicht ansonsten fest mit der Flachleiterschiene 1 verbunden bleibt, wird ein Haftvermittler 3 auf die Flachleiterschiene 1 aufgetragen. Wie hier schematisch dargestellt, kann der Haftvermittler 3 beispielsweise mittels jeweiliger Rollen 4 auf den jeweiligen oberen und unteren Flachseiten der Flachleiterschiene 1 aufgetragen werden. Um an den besagten Kontaktierungsbereichen eine besonders einfache Entfernung der Isolationsschicht ermöglichen zu können, können beispielsweise Maskierungen 5 oder auch Klebebänder 6 eingesetzt werden, welche vor dem Auftragen des Haftvermittlers 3 an ausgewählten Positionen der Flachleiteroberfläche 2 angeordnet werden. Dadurch kann auf zuverlässige Weise sichergestellt werden, dass an denjenigen Stellen, welche später als Kontaktierungsbereiche an der Flachleiteroberfläche 2 dienen sollen, kein Haftvermittler aufgetragen wird.

Bei einem quer über die Flachleiterschienenflachseite lokalisierten Kontaktierungsbereich der Flachleiteroberfläche 2 können die entsprechenden Rollen 4 von der Flachleiterschiene 1 abgehoben werden, so dass in diesem Bereich keine Benetzung mit dem Haftvermittler 3 erfolgt. Hierdurch wäre die Verwendung von Maskierungen 5 oder Klebebändern 6 nicht notwendig.

In Fig. 2 ist eine zweite Ausführungsform der Flachleiterschiene 1 in einer Perspektivansicht gezeigt. Die hier gezeigte Flachleiterschiene 1 ist etwas massiver ausgebildet als die in Fig. 1 gezeigte Ausführungsform der Flachleiterschiene 1. Mit anderen Worten weist die in Fig. 2 gezeigte Flachleiterschiene 1 ein größeres Schienenhöhe-zu-Breitenverhältnis auf als die in Fig. 1 gezeigte Ausführungsform. In diesem Fall bietet es sich an, dass an jeweiligen schmalen Längsseiten 7 der Flachleiterschiene 1 ebenfalls der Haftvermittler 3 aufgetragen wird. Dadurch, dass die hier gezeigte Flachleiterschiene etwas dicker ist, sind die schmalen Längsseiten 7 auch etwas dicker als bei der in Fig. 1 gezeigten Flachleiterschiene. Um auch an den schmalen Längsseiten 7 der hier gezeigten Flachleiterschiene 1 ein zuverlässiges Anhaften der noch aufzubringenden Isolationsschicht sicherzustellen, wird mittels jeweiliger Rollen 4 der Haftvermittler 3 auch an diesen Stellen aufgetragen. Um an gezielten Stellen, welche als Kontaktierungsbereiche dienen sollen, den Haftvermittler 3 auszusparen, wird im vorliegenden Fall wiederum ein Klebeband 6 auf die Flachleiteroberfläche 2 vor dem Auftragen des Haftvermittlers 3 angebracht.

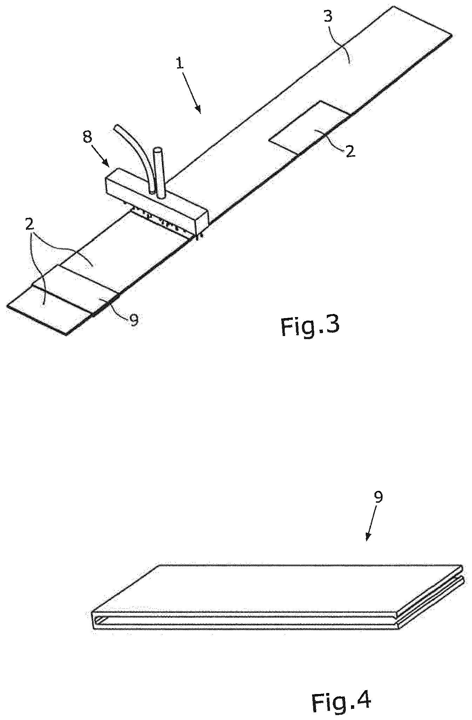

In Fig. 3 ist wiederum die erste Ausführungsform der Flachleiterschiene 1 in einer Perspektivansicht gezeigt, wobei im vorliegend gezeigten Fall der Haftvermittler 3 auf die Flachleiteroberfläche 2 mittels eines Sprühkopfes 8 aufgetragen wird. Alternativ ist es auch möglich, dass beispielsweise der Haftvermittler 3 statt mittels Sprühauftrag durch Inkjetdruckauftrag aufgetragen wird.

Im vorliegend gezeigten Fall wird eine lösbare Klemme 9 eingesetzt, um die Flachleiterschiene 1 lokal zu maskieren bzw. abzudecken. Die Klemme 9 wird an denjenigen Bereichen der Flachleiterschiene 1 angebracht, welche später als Kontaktierungsbereiche dienen sollen und wo vor dem Auftragen der Isolationsschicht diese wieder lokal entfernt werden muss.

Durch die Verwendung einer beweglichen Maskierung 5 (hier nicht dargestellt) kann ein Haftvermittlerauftrag auf einen definierten Teilbereich der Flachleiteroberfläche 2 ebenfalls verhindert werden.

In Fig. 4 ist die in Fig. 3 gesetzte Klemme 9 in einer Perspektivansicht gezeigt. Wie zu erkennen, weist die Klemme 9 einen mehr oder weniger U-förmigen Querschnitt auf. Die Klemme 9 kann beispielsweise seitlich auf die Flachleiterschiene 1 aufgesteckt und dann entlang dieser verschoben werden, um ausgewählte Bereiche zu maskieren, so dass in diesen Bereichen kein Haftvermittler 3 aufgetragen wird.

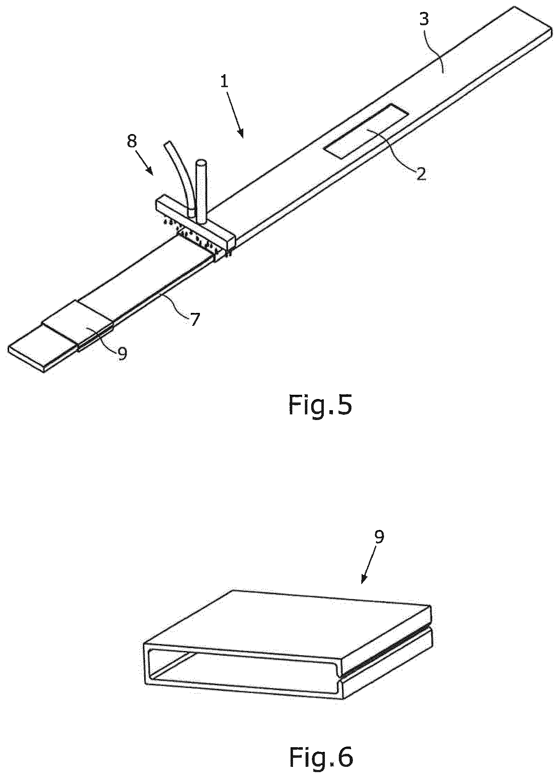

In Fig. 5 ist wiederum die zweite Ausführungsform der Flachleiterschiene 1 in einer Perspektivansicht gezeigt. Wie in Fig. 3 wird auch hier ein Sprühkopf 8 eingesetzt, um den Haftvermittler 3 mittels Sprühauftrag aufzutragen. Alternativ ist es hier auch ebenfalls möglich, stattdessen den Haftvermittler mittels Inkjetdruck aufzutragen.

Wiederum kommt eine Klemme 9 zum Einsatz, um die Flachleiterschiene 1 lokal zu maskieren und dadurch sicherzustellen, dass dort, wo die Klemme 9 angebracht ist, der Haftvermittler 3 nicht auf der Flachleiteroberfläche 2 aufgetragen wird. Die Klemme 9 ist im vorliegend gezeigten Fall so geformt, dass sie links- und rechtsseitig die jeweiligen schmalen Längsseiten 7 der Flachleiterschiene 1 ebenfalls maskiert bzw. verdeckt. Auch hier ist es möglich, durch eine selektive Steuerung des Sprühbalkens oder alternativ eines Inkjetdrucks selektive haftvermittlerfreie Flachleiteroberflächenbereiche 2 zu realisieren, ohne zusätzliche Maskierung.

In Fig. 6 ist die in Fig. 5 eingesetzte Klemme 9 in einer Perspektivansicht gezeigt. Wie zu erkennen, weist die Klemme 9 einen fast vollständig geschlossenen Querschnitt auf. Die Klemme 9 kann beispielsweise über eine Stirnseite Flachleiterschiene 1 gestülpt werden, um diese dann wunschgemäß an entsprechenden Positionen der Flachleiterschiene 1 zur Maskierung zu positionieren.

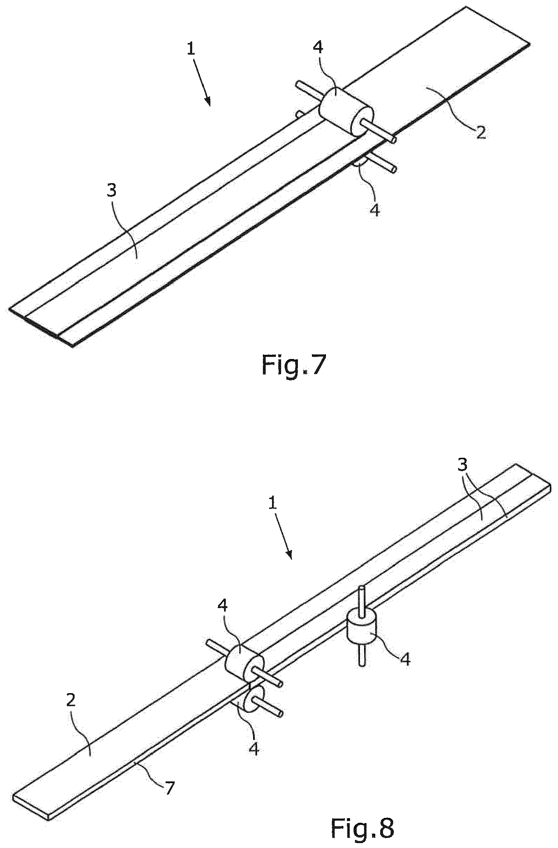

In Fig. 7 ist wiederum die erste Ausführungsform der Flachleiterschiene 1 gezeigt. Im vorliegend gezeigten Fall wird mittels jeweiliger Rollen 4 ober- und unterseitig ausschließlich an den Flachseiten der Flachleiterschiene 1 der Haftvermittler 3 streifenförmig aufgetragen. Wie zu erkennen, werden links- und rechtsseitig von den Rollen 4 jeweilige Bereiche der Flachleiteroberfläche 2 ausgespart, also nicht mit dem Haftvermittler 3 beaufschlagt. An diesen von dem Haftvermittler ausgesparten Bereichen kann also eine später aufgetragene Isolationsschicht besonders einfach wieder entfernt werden, wohingegen die Isolationsschicht in den Bereichen, wo der Haftvermittler 3 aufgetragen worden ist, besonders fest, insbesondere stoffschlüssig, mit der Flachleiterschiene 1 verbunden ist.

Alternativ ist es auch möglich, dass der Haftvermittler 3 anstelle des Rollenauftrags durch einen seitlich begrenzten Sprühauftrag kontinuierlich aber auch diskontinuierlich aufgetragen werden kann.

In Fig. 8 ist wiederum die zweite Ausführungsform der Flachleiterschiene 1 in einer Perspektivansicht gezeigt. Im hier gezeigten Fall wird ebenfalls mittels mehrerer Rollen 4 der Haftvermittler 3 streifenförmig auf der Flachleiterschiene 1 aufgetragen. Da diese zweite Ausführungsform der Flachleiterschiene 1 etwas dicker als die erste Ausführungsform der Flachleiterschiene 1 ausgebildet ist, wird mittels einer der Rollen 4 auch zumindest eine der beiden Schmalseiten 7 mit dem Haftvermittler 3 beaufschlagt. Wiederum werden gewisse Bereiche, welche ebenfalls streifenförmig ausgebildet sind, nicht mit dem Haftvermittler 3 beaufschlagt. Diese Bereiche können nach dem Aufbringen der hier nicht gezeigten Isolationsschicht wiederum relativ einfach von dieser befreit werden. Dort, wohingegen der Haftvermittler 3 aufgetragen worden ist, geht die Isolationsschicht eine besonders feste Verbindung mit der Flachleiterschiene 1 ein, vorzugsweise durch Ausbildung einer stoffschlüssigen Verbindung.

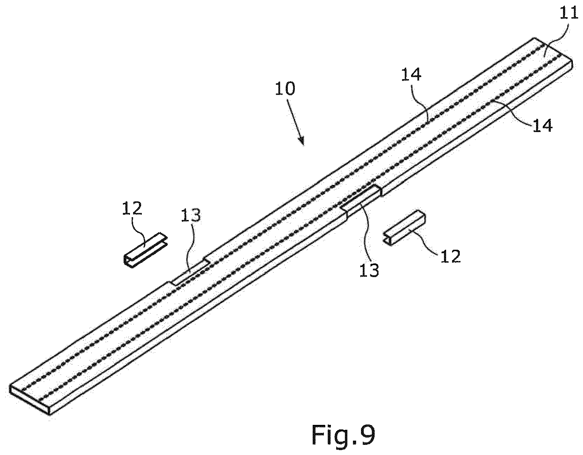

In Fig. 9 ist eine Flachleiteranordnung 10 gezeigt, welche die in Fig. 8 gezeigte, hier nicht näher bezeichnete Flachleiterschiene 1 und eine diese ummantelnde Isolationsschicht 11 umfasst. Nachdem die Flachleiterschiene 1 mit dem Haftvermittler 3 beaufschlagt worden ist, wird die Isolationsschicht 11 an der Flachleiterschiene 10 hergestellt. Die Isolationsschicht 11 kann beispielsweise dadurch hergestellt werden, dass die mit dem Haftvermittler 3 versehene Flachleiterschiene 1 durch ein hier nicht gezeigtes Extrusionswerkzeug hindurchgeführt wird, mittels welchem die Isolationsschicht 11 außenumfangseitig auf die Flachleiterschiene 1 aufextrudiert wird. Alternativ ist es beispielsweise auch möglich, dass die mit dem Haftvermittler 3 versehene Flachleiterschiene 1 in ein hier ebenfalls nicht dargestelltes Spritzgießwerkzeug eingelegt wird, mittels welchem anschließend die Isolationsschicht 11 angespritzt wird.

Nachdem die Isolationsschicht 11 außenumfangsseitig an der Flachleiterschiene 10 hergestellt worden ist, werden gezielt bestimmte Abschnitte 12 der hergestellten Isolationsschicht 11 entfernt. Dadurch werden die zuvor schon erwähnten Kontaktbereiche 13 freigelegt, also abisoliert.

Um die gezielte Entfernung der Abschnitte 12 der Isolationsschicht 11 zu erleichtern, werden nach der Herstellung der Isolationsschicht 11 jeweilige Markierungen 14 auf der Isolationsschicht 11 hergestellt, welche kennzeichnen, wo der Haftvermittler 3 aufgetragen worden ist und wo nicht. Diese Markierungen 14 können beispielsweise auf die Isolationsschicht 11 aufgelasert oder aufgedruckt werden.

Alternativ oder zusätzlich ist es auch möglich, dass für die Isolationsschicht 11 ein derartiges Material gewählt wird, welches zumindest teilweise transparent ist, wobei der Haftvermittler 3 in dem Fall dann noch eine andere Farbe aufweist als die Flachleiterschiene 1 und als die Isolationsschicht 11. Dadurch scheint der aufgetragene Haftvermittler 3 durch die Isolationsschicht 11 hindurch. Infolgedessen ist es einfach erkennbar, welche Bereiche der Flachleiteroberfläche 2 nicht mit dem Haftvermittler 3 beaufschlagt worden sind und wo die Abschnitte 12 auf besonders einfache Weise zur Freilegung der Kontaktbereiche 13 entfernt werden können.

Das Herstellen der Isolationsschicht 11 und das lokale Entfernen der Abschnitte 12 der aufgetragenen Isolationsschicht 11 kann auf die gleiche Weise auch bei den im Zusammenhang mit den Fig. 1 bis 7 beschriebenen Varianten durchgeführt werden.

Durch das Aufbringen des Haftvermittlers 3 und durch das lokale Aussparen des Haftvermittlers 3 an ausgewählten Stellen der Flachleiterschiene 1 kann somit sichergestellt werden, dass die Isolationsschicht 11 - dort wo der Haftvermittler 3 aufgetragen worden ist - eine feste Verbindung mit der Flachleiterschiene 1 eingeht, wobei zudem sichergestellt werden kann, dass die Kontaktbereiche 13 nach dem Aufbringen der Isolationsschicht 11 wiederum leicht von dieser befreit werden können. In den Bereichen der Flachleiteroberfläche 2, wo der Haftvermittler 3 aufgetragen worden ist, kann die Isolationsschicht 11 eine stoffschlüssige Verbindung mit der Flachleiterschiene 1 eingehen. Vorzugsweise besteht das Isolationsmaterial der Isolationsschicht 11 aus Thermoplasten oder thermoplastischen Elastomeren mit einer ausreichenden elektrischen Isolationseigenschaft und Flexibilität. Beispielsweise kann die Isolationsschicht 11 aus Polyolefinen (PP Copolymere, PE, etc.), Polyamiden (PA 12, etc.), PVC, TPE oder vernetzenden PE ausgebildet sein.

Besonders vorteilhaft ist es zudem, wenn die Flachleiterschiene 1 aus Aluminium hergestellt wird, beispielsweise aus einem Walzblech, einem Walzband, einem Strangpressprofil, aus Knet- oder Gießmaterial oder aus einer Folie. Als stromleitendes Kernmaterial für die Flachleiteranordnung 10 können neben Aluminium aber auch andere gängige elektrisch leitende Materialien bzw. Legierungen, beispielsweise Kupfer oder Messing eingesetzt werden.

Neben den dargestellten Varianten der Flachleiterschiene 1 können auch weitere unterschiedlichste Querschnittsgeometrien bzw. Profilformen in der beschriebenen Weise mit dem Haftvermittler 3 versehen und anschließend mit der Isolationsschicht 11 überzogen werden, um schließlich in den Bereichen, wo der Haftvermittler 3 ausgespart worden ist, die Abschnitte 12 der Isolationsschicht 11 zum Freilegen der Kontaktbereiche 13 zu entfernen. Der Haftermittler 3 kann natürlich zudem auch mit ganz anderen Formgebungen als beschrieben an der Flachleiterschiene 1 aufgebracht werden, wie zum Beispiel in Teilbereichen durchgehend, regelmäßig oder unregelmäßig sequenziell, gerastert oder gezielt selektiv.

### BEZUGSZEICHENLISTE

- 1: Flachleiterschiene
- 2: Flachleiteroberfläche
- 3: Haftvermittler
- 4: Rolle
- 5: Maskierung
- 6: Klebeband
- 7: Schmale Längsseite
- 8: Sprühkopf
- 9: Klemme
- 10: Flachleiteranordnung
- 11: Isolationsschicht
- 12: Abschnitt
- 13: Kontaktierungsbereich
- 14: Markierung

## Patentansprüche

1. Verfahren zum Herstellen einer Flachleiteranordnung (10), mit den Schritten:
- Bereitstellen einer elektrisch leitenden Flachleiterschiene (1);
- Vorgeben von zumindest einem Kontaktierungsbereich (13) an einer Flachleiteroberfläche (2) der Flachleiterschiene (1);
- Auftragen eines Haftvermittlers (3) an der Flachleiteroberfläche (2) unter Aussparung des zumindest einen Kontaktierungsbereichs (13), wobei der Haftvermittler (3) eine stoffschlüssige Verbindung zwischen der Flachleiterschiene (1) und einem vorgegebenen Isolationsmaterial begünstigt;
- Herstellen einer das Isolationsmaterial aufweisenden Isolationsschicht (11) an der Flachleiterschiene (1), nachdem diese mit dem Haftvermittler (3) versehen worden ist;
- Entfernen eines am Kontaktierungsbereich (13) der Flachleiterschiene (1) hergestellten Abschnitts (12) der Isolationsschicht (11).

2. Verfahren nach Anspruch 1,
**dadurch gekennzeichnet, dass** vor dem Auftragen des Haftvermittlers (3) die Flachleiteroberfläche (2) derart behandelt wird, dass eine stoffschlüssige Verbindung zwischen dem Haftvermittler (3) und der Flachleiterschiene (1) begünstigt wird.

3. Verfahren nach Anspruch 2,
**dadurch gekennzeichnet, dass** die Flachleiteroberfläche (2) elektrochemisch, chemisch oder physikalisch behandelt wird.

4. Verfahren nach einem der vorhergehenden Ansprüche,
**dadurch gekennzeichnet, dass** der Haftvermittler (3) nach dem Auftragen auf die Flachleiteroberfläche (2) thermisch behandelt wird.

5. Verfahren nach einem der vorhergehenden Ansprüche,
**dadurch gekennzeichnet, dass** der Haftvermittler (3) zumindest in Teilbereichen einen duroplastischen oder thermoplastischen Polymerwerkstoff aufweist.

6. Verfahren nach Anspruch 5,
**dadurch gekennzeichnet, dass** der Haftvermittler (3) eine erste Seite mit einer polaren, chemisch reaktiven Gruppe und eine zweite Seite mit Materialbestandteilen umfasst, welche sich ebenfalls in dem Isolationsmaterial befinden, wobei die erste Seite der Flachleiteroberfläche (2) und die zweite Seite der Isolationsschicht (11) zugewandt wird.

7. Verfahren nach einem der vorhergehenden Ansprüche,
**dadurch gekennzeichnet, dass** der Haftvermittler (3) mittels zumindest einem der folgenden Verfahren aufgetragen wird:
- Sprühauftrag, wobei ein den Teilbereich umgebender Bereich der Flachleiteroberfläche (2) maskiert wird;
- Sprühauftrag auf Teilbereiche der Flachleiteroberfläche (2) ohne Maskierung (5);
- Tampondruck;
- Rollenauftrag;
- Siebdruck;
- Inkjetdruck.

8. Verfahren nach einem der vorhergehenden Ansprüche,
**dadurch gekennzeichnet, dass** vor dem Auftragen des Haftvermittlers (3) der zumindest eine Kontaktierungsbereich (13) an der Flachleiteroberfläche (2) abgedeckt wird.

9. Verfahren nach einem der vorhergehenden Ansprüche,
**dadurch gekennzeichnet, dass** das Isolationsmaterial zumindest teiltransparent ist und der Haftvermittler (3) eine andere Farbe als das Isolationsmaterial und als die Flachleiterschiene (1) aufweist.

10. Verfahren nach einem der vorhergehenden Ansprüche,
**dadurch gekennzeichnet, dass** der unterhalb der Isolationsschicht (11) angeordnete Kontaktierungsbereich (13) auf der Isolationsschicht (11) markiert wird.

11. Verfahren nach einem der vorhergehenden Ansprüche,
**dadurch gekennzeichnet, dass** die Isolationsschicht (11) hergestellt wird, indem die mit dem Haftvermittler (3) versehende Flachleiterschiene (1) durch ein Extrusionswerkzeug hindurchbefördert wird, mittels welchem die Isolationsschicht (11) außenseitig auf die Flachleiterschiene (1) extrudiert wird.

12. Verfahren nach einem der Ansprüche 1 bis 11,
**dadurch gekennzeichnet, dass** die Isolationsschicht (11) hergestellt wird, indem die mit dem Haftvermittler (3) versehende Flachleiterschiene (1) in ein Spritzgießwerkzeug eingelegt und anschließend die Isolationsschicht (11) außenseitig auf die Flachleitschiene (1) angespritzt wird.

13. Verfahren nach einem der vorhergehenden Ansprüche,
**dadurch gekennzeichnet, dass** das Auftragen des Haftvermittlers (3) in einen Herstellprozess der Flachleiterschiene (1) oder in einen Herstellprozess der Isolationsschicht (11) integriert wird.

14. Verfahren nach einem der vorhergehenden Ansprüche,
**dadurch gekennzeichnet, dass** am Kontaktierungsbereich (13) der Flachleiterschiene (1) nach Entfernung des Abschnitts (12) der Isolationsschicht (11) das Anbringen eines Kontaktierungselements in Form einer Schraublasche, einer Steckzunge, eines Schraubbolzens oder eines Litzenleiters erfolgt.
